# EUROPEAN PATENT APPLICATION

(11) **EP 1 465 050 A2**
(43) Date of publication of application: **06.10.2004**
(21) Application number: 04004510.6
(22) Date of filing: 27.02.2004
(51) Int. Cl.: G06F 3/12, G06F 9/445

(54) **System and method for updating software and version control in a production printer**

(30) Priority: 31.03.2003 US 459089 P
(71) Applicant: Heidelberger Druckmaschinen Aktiengesellschaft, 69115 Heidelberg (DE)
(72) Inventor: Godshalk, Russell L., Hilton New York 14468 (US); Hansen, David Robert, Honeoye Falls NY 14472 (US); Hughes, Mark, Spencerport NY 14559 (US); Hull, Thomas Richard, Spencerport NY 14559 (US); Scott, Lavender D., Rochester NY 14612 (US)
(74) Representative: Franzen, Peter

(57) **Abstract**

A production printer having multiple input sources and an output source includes a Web server, a print server, and a printer. The Web server controls a repository of software and data that supports the software. A print server linked to the Web server is configured to download and install software stored on the Web server. The printer linked to the print server produces images on sheets received from one or more of the input sources. A method of downloading and installing software from a publicly accessible network into a printer includes: launching a monitoring program that searches across a publicly accessible network to generate a list of software, recording the addresses of potential software to be copied to one of a remote and a local interface; and installing the software in a memory to be installed immediately or stored for a later installation.

## Description

### FIELD OF THE INVENTION

This invention relates to a system and a method that monitor and control a printing process, and more particularly, to a system and a method that download and install software in a production printing process.

### BACKGROUND

A printing interface can provide many printing options. Through a terminal, a user can manipulate images, data, and print requests that are written to a sub-system and then passed to a print engine. Processing occurs at the sub-system, which provides a common connection to the terminal and the print engine.

In this hub-and-spoke type architecture, each resource, application, and user request is executed or routed through a single entity, the subsystem. As resources, applications, and user requests increase, the throughput of subsystem can decrease as it attempts to service multiple requests. As the volume increases, the reliability of the printing system can be compromised slowing down the response speed of the system, and causing the discard or corruption of pending data and print jobs. In a high volume printing system, even queued data or buffered jobs can waste a significant amount of resources when that data or those jobs are corrupted.

One possible solution for controlling such high traffic is to increase the memory that receives the data and jobs that are eventually transferred to the print engine. Unfortunately, a hardware solution can be expensive. Also, hardware can be susceptible to slow response times and corruption as additional terminals interface the subsystem and transmit more data and more print requests. Thus, there is a need for a system and method that provide fast processing and high throughput as network traffic increases in a production printing system.

### SUMMARY

The present invention is defined by the following claims. This description summarizes some aspects of the present embodiments and should not be used to limit the claims.

A production printer having a plurality of input sources and an output source includes a Web server, a print server, and a printer. Preferably, the Web server controls a repository of software. A print server coupled to the Web server is configured to download and install software from the Web server. The printer coupled to the print server produces images on sheets received from one or more of the input sources.

A method of downloading and installing software from a publicly accessible network into a printer comprises: launching a monitoring program that searches across a publicly accessible network to generate a list of software, recording the addresses of potential software to be copied or transferred to a remote or a local interface; and installing the software in a memory.

Further aspects and advantages of the invention are described below in conjunction with the present embodiments.

### BRIEF DESCRIPTION OF THE DRAWINGS

Figure 1 is a system diagram of a present embodiment.

Figure 2 is a block diagram of an alternative embodiment.

Figure 3 is a flow diagram of a method embodiment.

### DETAILED DESCRIPTION OF THE PRESENT EMBODIMENTS

The present system and method provide fast processing and high throughput in a digital high volume production printing process. Preferably, middleware that sits between a user and a marking engine enables a user to create and link images and header fields that are transferred to a subsystem or to a marking engine.

A present system and method perform processing at separate computers coupled through a communication path. Using a plain distributed or a true distributed processing architecture, the software and/or hardware share resources and exchange information. In one embodiment, the system and method enable users or system providers to download and install software automatically. The software can be installed immediately or delayed for a later installation. Preferably, a version controller tracks successive releases or changes in the software. In one embodiment, a version controller facilitates a validation or installation process of a portion of a program (e.g., a program component) or an entire program. Preferably, the version controller manages distribution.

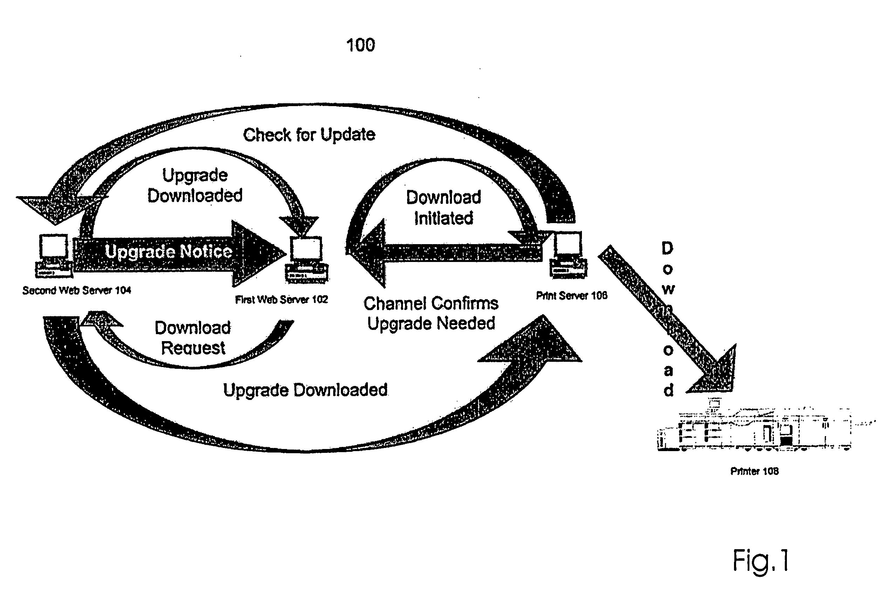

Figure 1 is a system diagram of a present embodiment. The present embodiment illustrates a printing system 100 that facilitates the translation of a physical representation (e.g., a printed page) into digital data. Preferably, the printing system 100, which encompasses a digital printing system and/or a duplicating system, is loaded with media. Although a single print server 106 is shown, other embodiments of the system and method comprise multi-user systems that support more than one print server.

Preferably, the printer server 106 includes a user interface that allows a user to support scanning features, select printing features, and specify print options for a print job. For instance, in one embodiment the user interfaces can monitor the status of a print job, review user requests such as a request for a two sided flip on a long edge format, or a request for a document on a colored paper such as red paper. In this embodiment, the user interface encompasses any user selection device or command based device such as touch screens, light pens, graphical user interfaces (GUI), and/or command based systems. In another embodiment, the system supports scan print, scan store, and scan store print jobs.

Preferably, user interface within the print server 106 allows a user to view and update the attributes of a selected media such as the size, color, weight, and type of media to be used in a print job. Many different types of media may be used within one or among many documents. In the present embodiment, the user interface may indicate that some media sheets may receive printing while other media sheets do not, and are only inserted within a printed document.

Preferably, a communication protocol links the print server 106 to the Web servers 102 and 104. Preferably, the communication protocol enables users to receive manual and/or automatic updates. The servers 102 - 106, which comprise a first and a second Web server 102 and 104 and a print server 106 are shown as separate computers but can each comprise a server cluster that is made up of a group of computers that present the appearance of a single server. In figure 1, the first and second Web server 102 and 104 serve up documents, associated files, plug-ins, patches, and/or new or updated software on demand or automatically.

Preferably, the communication path between the first Web server 102 and the print server 106 facilitates software sharing between the first Web server 102, the print server 106, and a production printer 108. A communication protocol, such as a Common Gateway Interface ("CGI"), allows the client 102/108, which encompasses the print server 102 and/or the production printer 108 in this embodiment, to automatically or manually check for a new release, an update, a patch, a plug-in, or a different version of software. In this embodiment, a user visiting a site sponsored by the first Web server 102 can chose to receive the new release, the update, the patch, the plug-in, or a different version of software stored on the first Web server 102 through the communication path or a storage medium such as a CD-ROM or a disk, for example.

In this embodiment, preferably the Web server 102 can assess the needs of the client 106/108 and act as or control a central repository of software and/or data to be downloaded. Software can then be downloaded and launched automatically, or cached within the print server 106, or cached within the production printer 108 for an offline installation. To avoid installation delays or disrupting other applications, on-line or off-line installations can be scheduled by a calendar program, such as Microsoft Outlook™, for example.

A connection between the first Web server 102, the print server 106, and/or the production printer 108 can be intermittently or continuously established with or without a user's consent or knowledge by using cookies or using data gathered from a client information recording method, for example. In one embodiment, the link between the Web server 102 and the client 106/108 is established when a specific request is received from the client 106/108. In this embodiment, the Web server 102 does not retain information to actively establish a connection. If a client 102/108 is in need of information and/or software, the client 106/108 must establish a connection to the first or second Web servers 102 and 104. In a second embodiment, information and/or software are exchanged automatically or on demand from a client 106/108 or from the first or second Web Servers 102 or 104. Preferably, the first and second Web servers 102 and 104, the print server 106, and/or the production printer 108 can track information that allows each of these components to establish a connection to the first and second Web servers 102 and/or 104, the print server 106, and/or the production printer 108.

In Figure 1, the provider server, shown as the second Web server 104, can also act as or control a central repository of software and/or data. Preferably, the second Web server 104 can distribute information, software, and channel updates directly to the client 102/108 and/or to the first Web server 102. Preferably, the client 102/108 and first Web Server 102 can pull documents and/or software from the second Web server 104. The software can comprise patches, revisions, plug-ins, new programs, and partial or full software programs. As shown, the print server 106 can submit a request to either of the first or second Web server 102 and 104. Once a request is confirmed, the first and/or second Web servers 102 and/or 104 can transfer documents or software to the print server 106. The communication path that facilitates the transfer can comprise a publicly accessible network such as the Internet and a privately accessible network such as an intranet, a circuit-switched network, a data packet network, a token ring network, a bus network, an Ethernet Network, a Wide Area Network, and/or a Local Area Network, etc. In the illustrated embodiment, preferably, the print server 106 can check for software and other updates and can receive downloads that are installed immediately or at a later time. In some embodiments, the software or information is installed in the print server 106 or in the production printer 108. The software itself can be self-extracting, self-installing, and/or self-registering.

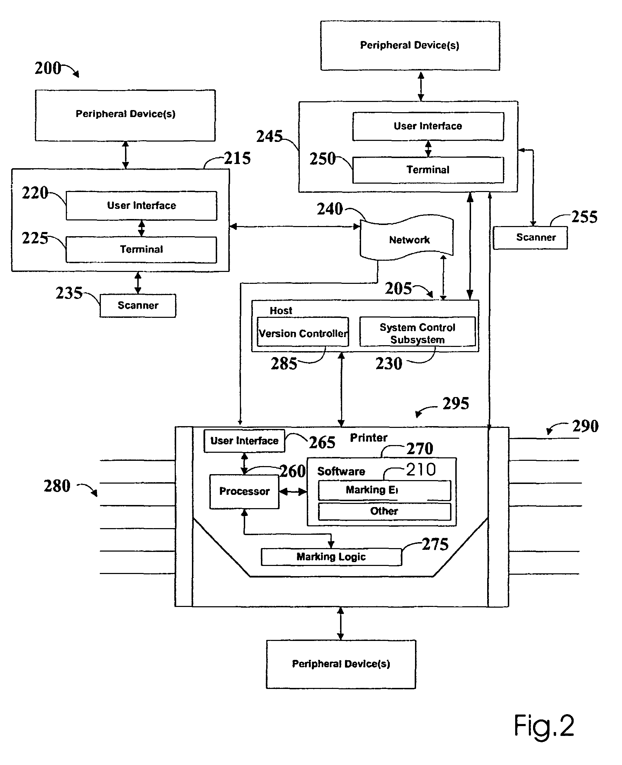

To ensure that network bandwidth is not overloaded, preferably application software that is usually executed and stored within a system control sub-system is stored and executed in the print server 106. In this embodiment, the printing system 100 comprises a distributed system. Preferably, the application software provides conventional and advanced printing functionality and commands that can be written to a system control subsystem spooler or received directly by a marking engine, such as the marking engine 210 shown in figure 2. By installing and updating application software directly within the print server 108, it is not necessary for a system control subsystem to further process images and/or headers every time a print request is submitted to the production printer 108. Thus, there is less information exchanged between servers and less of a traffic load on the network.

Figure 2 is a block diagram of a present alternative embodiment. The alternative embodiment illustrates a printing system 200 that has one or more input sources 280 and one or more output destinations 290. The presently preferred printing system 200 is a multi-user system that supports local and/or remote interface(s) 215 and 245. As shown, preferred local and remote interfaces 215 and 245 are terminals that are part of a network printing system. Preferably, the printing system 200 can provide users with one or more features such as the insertion of separator sheets, insertion of pre-collated media, multiple set collating, two-sided printing, printing pages on different paper stock, stapling, offset stacking, booklet printing, folding, accent color, use with transparencies, use with slides, etc.

Preferably, the present remote interface 215, located at a site removed from the printer 295, includes a user interface 220 coupled to the host 205. In the illustrated embodiment, the host 205 comprises a computer or a workstation, which is a combination of input (e.g., pointing device(s), keyboard(s), etc.,), output (e.g., display(s), serial interfaces(s), and/or parallel interface(s), etc.,), and computing hardware. This combination can include a graphics based system such as a graphical user interface (GUI) and/or a command based system such as a command line interface. Preferably, the host 205 enables local or remote users to receive documents, patches, plug-ins, or versions of software automatically or on demand. Preferably, the host 205 also includes a version controller 285 that tracks version numbers assigned to software resident to the remote and local interface 215 and 245, and in some embodiments, the printer 295. Preferably, the version numbers identify a particular program at a particular stage of development or use.

While the present remote interface 215 shown in figure 2 includes a scanner 235 that preferably can transmit images through the remote interface 215, alternative preferred embodiments support many other peripherals. Like some preferred local interfaces, the preferred remote interface 215 can originate print files and/or print jobs and/or act as a receiving source that captures data (e.g., a receptor) from external sources to be processed by a system controller subsystem 230 or directly by a printer 295.

Preferably, the present remote interface 215 is coupled to the printer 295 through a communication link that can also include a network 240. Through one path, software captures user input, builds a print request, and transfers the request as a print job to the system controller subsystem 230 through the network 240. Preferably, the network 240 provides cross-platform connectivity between the remote interface(s) 215 and the host 205, and in some embodiments, to the printer 295. In the present embodiment, any network architecture can be used including publicly accessible networks such as the Internet and privately accessible networks such as an intranet, a circuit-switched network, a data packet network, a token ring network, a bus network, an Ethernet Network, a Wide Area Network, and/or a Local Area Network, etc.

Like the present remote interface(s) 215, the present local interface(s) 245 also has many configurations. In the illustrated embodiment, the local interface 245 comprises a terminal 250, which encompasses a computer or a workstation. The presently preferred local terminal 250 comprises a combination of input (e.g., pointing device(s), keyboard(s), etc.,), output (e.g., display(s), a serial interface(s), and/or parallel interface(s), etc.,), and computing hardware. This combination preferably includes a graphics based system such as a graphical user interface (GUI) and/or a command based system such as a command line interface. While the illustrated local interface 245 shown in figure 2 includes a scanner 255 that can transmit images through the local interface 245 directly to host 205, the local interface 245 can also transmit images directly to the printer 295. Like some remote interfaces, the present local interface 245 can originate print files and/or print jobs and/or act as a receiving source that captures data (e.g., a receptor) from external sources to be processed by the system controller subsystem 230. Preferably, the remote and local interfaces 215 and 245 capture input and build print files and/or print jobs that are transferred either directly to the host 205 or to the printer 295.

As shown, the illustrated printer embodiment 295 includes a processor 260, a user interface 265, and software 270. Preferably, the processor 260 manages some or all aspects of printing one or multiple jobs. Although many controller infrastructures can be used, the present processor 260 uses one or more data processors arranged in a serial, parallel, or a multiprocessing configuration. Preferably, the processor(s) manages the pattern of media transports from the source(s) 280 through the media path(s) to the final output destination(s) 290. In the present embodiment, the processor 260 also interprets and executes instructions to achieve the desired output characteristics of a printed document. In some embodiments, these characteristics include image scaling, image resolution, image darkness and/or intensity control, order control, the selection of media(s) for an output set, the stapling of sheets in an output set, the binding of sheets in an output set, the punching of holes in an output set, and/or other attributes a user desires.

Preferably, the printer 295 maintains data within a memory and has an open architecture that comprises a memory bank, a cache, and a storage media that can retain data but still allow for reprogramming. Like the remote and local interfaces 215 and 245, the present printer 295 can include direct memory access that can be used to transfer data to internal or peripheral devices without using a processor. In some embodiments, distributed memory within the host 205, remote and local interfaces 215 and 245 is used by the printer 230 to process print jobs, update user or application software, store status data, pass parameters, and/or allow real-time interactive or a delayed information exchanges between the printer 295, the remote and local interfaces 215 and 245, and the host 205.

As shown in figure 2, the printer embodiment 295 includes a user interface 265. Preferably, the user interface 265, like the user interfaces integrated within the local and remote interfaces 215 and 245, allows a user to select printing features and specify print options for a print job. For instance, the preferred user interfaces can monitor the status of a print job, review user requests such as a request for a two sided flip on a long edge format, or a request for a document on a colored paper such as red paper. In the present embodiment, the illustrated user interface 265 encompasses any user selection device or command based device such as touch screens, light pens, graphical user interfaces (GUI), and/or command based systems.

Preferably, each of the user interfaces allows a user to view and update the attributes of media such as the size, color, weight, and type loaded in the input sources 280 shown in figure 2. Many different types of media may be used within one or among many documents. In the present embodiment, some media sheets may receive printing while other media sheets do not, and are only inserted within a printed document.

The present system and method is protocol independent meaning many different types of data can be written to the host 205 or the system control subsystem 230. Such data may have native application formats, such as data formatted by Microsoft Office™ Product suites, others may have desktop publishing formats such as data formatted by QuarkXpress™, or FrameMaker™, and/or other may have transport formats such as File Transfer Protocol ("FTP"), IPX/SPX, TCP/IP, etc.

Preferably, the present host 205 and system controller subsystem 230 also accepts Tagged Image File Format ("TIFF") and data that can be directly passed to a marking engine such as portable document formats ("PDF"), PostScript ("PS") formats, Printer Control Language ("PCL") formats, Kodak Graphics Language ("KGL") formats, etc.

For hard copy input translated by a scanner, the present system controller subsystem 230 supports industry standard scanner interfaces such as TWAIN, as defined by the TWAIN group and the Image and Scanner Interface Specification ("ISIS") specified by the American National Standards Institute specification ANSI/AIIM MS61-1996.

In the present embodiment, the system controller subsystem 230 can also spool print jobs through an input queue. Preferably, the input queue is a multi-element data structure in which print jobs wait in turn to be removed according to a predetermined sequence. In this present embodiment, the preferred print jobs are removed in the same order in which they are received, that is, the input queue follows a first-in-first-out ("fifo") sequence. There are also several types of other queues used in alternative embodiments in which removal is based on factors other than an order of insertion. For example, in some alternative embodiments print jobs are processed by a priority wherein a user or operator assigns priority values to each print job. Preferably, the print jobs reference image and/or text files that are preferably passed to the printer 295.

Preferably, the paths between the host 205, the remote and local interfaces 215, and 245, and the printer 295 enable users to automatically receive information or software. In this embodiment, resources resident to the host 205 are shared when a user or client device accesses the host 205. Preferably, a transfer or download system or method resident to the host 205 distributes information and software automatically or on demand. When access is granted, information, software, or components of that information and software can be copied to a storage medium or a memory of the remote or local interfaces 215 or 245 or the printer 295. This information or software can be installed immediately or stored for an offline installation later. In one embodiment, an installation program resident to the remote and local interfaces 215 and 245 installs the software. The installation program may be self-directed or may guide a user through the process of setting up an application. To enhance functionality, hooks can be used to customize the installation process. The hooks can override the installation process or customize the software to a particular client or to address a particular need.

In some embodiments, the version controller 285 within the host 205 compares version numbers of the software resident to a destination to a version number to be copied or transferred. If the version controller 285 detects an outdated or compatible version at the destination, the version controller 285 can transfer the software, and in some instances, automatically register it. If the version controller 285 determines that a scheduled or requested transfer is incompatible with the software resident to the destination, preferably the version controller 285 notifies the end user through an interface. In some embodiments, the version controller 285 tracks the transferred version of the software and notifies users of its features before or after installation.

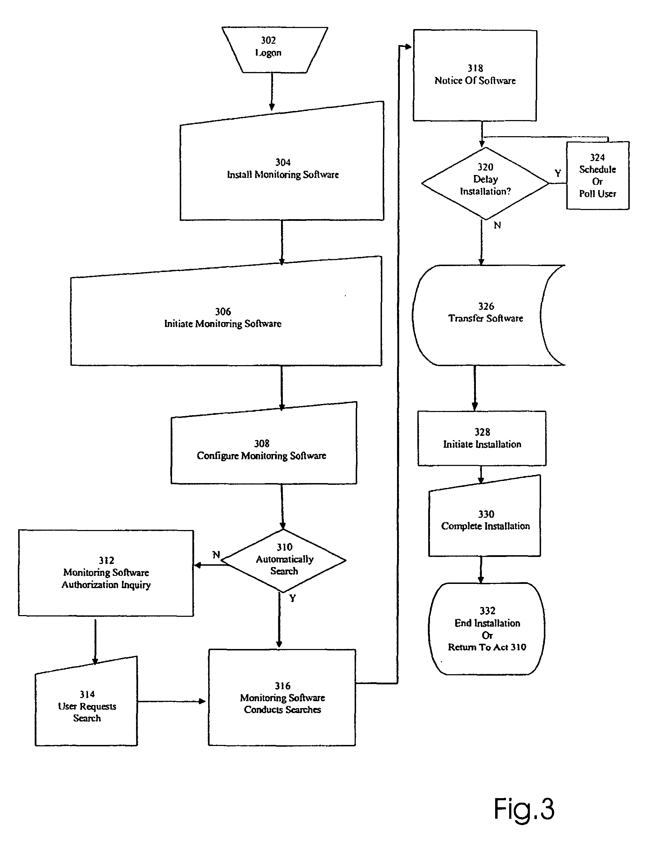

Figure 3 illustrates a flow diagram for receiving software and supporting data files. Preferably, the method begins when a user logs onto a remote or local interface at act 302. During the logon procedure, the computer can request the user's name and password.

At act 304, monitoring software is installed on a remote or local interface. In the present embodiment, the monitoring software comprises a Microsoft Windows™ based software that searches across many Web sites, using agents such as spiders and bots to gather lists of available scanning and/or printing related software and documents. Installation can occur on-line or from a storage media such as a CD-ROM or a disk, for example. An installation program might be used to guide the user through the process of setting up the monitoring software.

At act 306, the present method initiates the monitoring software. Through a programmed control, the monitoring software can be customized to monitor only specific programs, such as those the user has been licensed to use or that a user specifies (e.g., limited to scan or printing based software, for example) or any other type of software.

At act 308, the user or a process configures the monitoring software that performs the repetitive tasks of searching publicly and/or privately accessible sites (e.g., the Internet or an intranet, etc.) for printing software. Preferably, the user programs certain aspects of the software to enable or disable features such as setting limits on the number of sites visited, for example.

At act 310, the present method determines if a search should be executed. If a user did not authorize automatic searches, preferably, the method waits for an authorization from the user before searching the selected network(s). In the illustrated embodiment, at act 312 and 314 the present method delays automated searches of the network(s) until a user requests a search.

At act 316, preferably the monitoring software searches the network(s) and records addresses and content related information within a database or a memory. Preferably, the name of the server which the resource resides, and optionally, the path to the resource is recorded.

At optional act 318, the user is notified that a new release or version of software is available for installation. The new release or version can be installed immediately, or stored for a later installation. In those embodiments configured to automatically install the software, the software enables a self-extraction if needed, a self-installation, a self-launch, and in some embodiments, a self-registration locally or at a remote site before the method continues at act 332.

If a user elects to delay an installation at act 320, the present system can schedule a later installation or poll the user at programmed intervals at act 324. Preferably, downloads and installations can occur on or off-line in real or delayed time.

At act 326, preferably patches, revisions, plug-ins, new programs, and partial or full software upgrades are transferred or copied from a Web server or host to a storage medium or a memory of a remote or local interface or a printer.

At act 328, an installation program installs the software in a storage medium or in memory. In the illustrated embodiment, the installation program can guide a user through a simple or complex process of setting up the software. While some embodiments of the present method are self-installing and launch automatically, the present embodiment prompts the user through the installation at act 330.

At act 332, the process ends or returns to act 310. In alternative embodiments, if a software installation occurred, the present method can reset the remote or local interface(s) or printer. Through a warm boot, the present remote or local interface(s) or printer can load and execute the operating system and prepare for the use of the newly loaded software.

The above described method can download application software with application data that supports the software to minimize further communication between the Web servers or host and a client interface. The application data can include user authentication data, user class data, user authorized function data, constraint data, paper catalog data, etc. Preferably, the data is served up with the applications and remains resident within the client interface. If the data or software is static or does not change often, preferably that software or data remains resident to the client interface in a cache, a nonvolatile memory, or a storage device. Examples of static software can comprise scan applications, assemble applications, device applications, and job management applications, for example.

Some embodiments also include a system or method for monitoring version numbers. Through comparisons, the system or method can determine when software or data needs to be updated. Updates can occur at a client's election or through an auto-polling process. In an auto-polling process, a distributor or software provider can periodically determine the status of the data or software with or without user's knowledge. By monitoring the status of the data and software a distributor can market data or software directly to users that can include new plug-ins, new releases, or patches that add a feature or function to the software or repair a deficiency in a routine or a program. In some embodiments, software can be transferred automatically or updated with or without a client's knowledge.

Some alternative embodiments also include a certificate authority for issuing and/or verifying that the software transferred from a network comes from a reputable source. In these embodiments, the certificate authority is responsible for providing and assigning a unique string of numbers and/or characters that make up the "keys" used in digital certificates for authentication. Preferably, these keys can be used to encrypt and decrypt software and provide information about the software. Such information can include the identity of the author, the date the software was registered, etc.

Preferably, software applications and its related application data are served up to the client's interface. Preferably, communication between the client and the host is reduced. In some embodiments, communication is reduced by serving up software and data only when a user requests it. Preferably, the processing associated with constraints, authorized functions, creation of job tickets, etc., can occur on the client's interfaces independent of the host. Thus, the header and images that comprise some job requests can bypass the host and can be passed directly to the printer. Alternatively, the job requests can pass through a host without further processing.

Many other alternative embodiments are also possible. For example, some system and methods bypass Web servers or hosts. In these alternative embodiments, the transfer of information and/or software occurs between the printer and the client's interface. In these embodiments, the structure and function of the host can be integrated within or become a unitary part of the printer. Moreover, the invention is not limited to a hub-and-spoke architecture, in which each resource, application, or job request flows through a single entity to reach any other resource. In alternative embodiments, a peer-to-peer relationship provides direct access to software and other information to other client interfaces and applications.

The invention is not limited to a device or process that periodically determines the status of the software and can download software automatically such as through an auto-polling device or process. In some alternative embodiments an event-driven processing can alert clients of an updated or new program or routine and can transfer a copy of such software before receiving a request. Furthermore, it should be understood that the invention has been described through a client/server architecture in which devices such as the printer and servers can act as client(s) as well as server(s) in some embodiments.

In some alternative embodiments, upgrade notices, update requests, and installation confirmation can be passed between devices. These communications can originate from the devices exchanging software and information or from peripheral devices.

It is intended that the foregoing detailed description be regarded as illustrative rather than limiting, and that it be understood that it is the following claims, including all equivalents, that are intended to define the spirit and scope of this invention.

### REFERENCE LIST

- 100: printing system
- 102: web server
- 104: web server
- 106: print server
- 108: printer

- 200: printing system
- 205: host
- 210: marking engine
- 215: interface
- 220: user interface
- 225: terminal
- 230: system controller subsystem
- 235: scanner
- 240: network
- 245: interface
- 250: terminal
- 255: scanner
- 260: processor
- 265: user interface
- 270: software
- 275: marking logic
- 280: input sources
- 285: version controller
- 290: output destinations
- 295: printer

- 302-332: acts

## Claims

1. In a printer comprising a plurality of input sources (280) coupled to an output source, comprising:
a first Web server (102) that controls a first repository of software and data that supports the software;
a print server (106) coupled to the first Web server (102) configured to download and install software stored on the first Web server (102); and
a printer (108) coupled to the print server (106) that produces images on sheets received from one of a plurality of input sources (280) coupled to an output source.

2. The printer of claim 1, further comprising a path that intermittently couples the print server (106) to the first Web server (102) at a client's request.

3. The printer of claim 1, further comprising a path that continuously couples the print server (106) to the first Web server (102).

4. The printer of claim 1, further comprising a path that automatically couples the print server (106) to the first Web server (102).

5. The printer of claim 1, wherein the repository of software comprises computer scanning and printing related software.

6. The printer of claim 2, wherein the software is self-extracting and self-registering.

7. The printer of claim 1, further comprising a second Web server (104) that controls a second repository of software and data coupled to the first Web server (102) and the print server (106).

8. The printer of claim 1, wherein the print server (106) and printer (108) each comprise a user interface that can select print features and specify print options in a print job.

9. The printer of claim 1, wherein the print server (106) is coupled to the first Web server (102) and production printer in a hub-and-spoke architecture.

10. The printer of claim 1, wherein the print server (106) is coupled to the first Web server (102) and production printer in a peer-to-peer architecture.

11. The printer of claim 1, further comprising a version controller (285) coupled to the print server that facilitates a validation and an installation of a program installed on the print server.

12. In a high volume digital production printer comprising a plurality of input sources (280) coupled to an output source, comprising:
a printer that produces images on sheets received from one of a plurality of input sources coupled to an output source;
a remote interface coupled to the printer through a host, the remote interface being located at a site removed from the printer; and
a local interface coupled to the printer through the host; wherein
the remote interface and local interface are configured to automatically copy software from the host to storage media resident to the remote interface and local interface, respectively.

13. The high volume digital production printer of claim 12, wherein the printer can control an image resolution.

14. The high volume digital production printer of claim 12, further comprising a scanner coupled to the remote interface.

15. The high volume digital production printer of claim 14, wherein the scanner can control an image resolution.

16. The high volume digital production printer of claim 12, wherein the printer, the remote interface, and the local interface each comprise a user interface.

17. The high volume digital production printer of claim 12, wherein the host comprises a subsystem that can spool print jobs.

18. The high volume digital production printer of claim 12, wherein the host comprises a version controller configured to determine when software resident to one of the remote and local interface needs to be updated.

19. A method of downloading and installing software from a publicly accessible network into a digital high volume printer, comprising:
launching a monitoring program that searches across a publicly accessible network to generate a list of software;
recording the addresses of potential software to be downloaded to one of a remote and a local interface; and
installing the software in a memory to be installed immediately or stored for a later installation.

20. The method of claim 19, wherein the launching program is resident to said one of the remote and the local interfaces.

21. The method of claim 20, wherein the act of installing the software occurs within the digital high volume printer.

22. The method of claim 19, further comprising the act of polling the user at a programmed interval if a user elects to delay the installing act.
